(19) Europäisches Patentamt
European Patent Office
Office européen des brevets

(11) **EP 1 877 455 B1**

(12) **EUROPEAN PATENT SPECIFICATION**

(45) Date of publication and mention
of the grant of the patent:
**19.05.2010 Bulletin 2010/20**

(51) Int Cl.:
***C08F 210/02*** *(2006.01)*   *H01L 31/048* *(2006.01)*

(21) Application number: **06715662.0**

(22) Date of filing: **08.03.2006**

(86) International application number:
**PCT/JP2006/305071**

(87) International publication number:
**WO 2006/095911 (14.09.2006 Gazette 2006/37)**

(54) **ENCAPSULATION MATERIAL FOR SOLAR CELL ELEMENT**

VERKAPSELUNGSMATERIAL FÜR SOLARZELLENELEMENT

MATÉRIAU D' ENCAPSULATION POUR ÉLÉMENT DE PILE SOLAIRE

(84) Designated Contracting States:
**DE FR GB**

(30) Priority: **08.03.2005 JP 2005064282**

(43) Date of publication of application:
**16.01.2008 Bulletin 2008/03**

(73) Proprietors:
• **Du Pont-Mitsui Polychemicals Co., Ltd.
Tokyo 105-7117 (JP)**
• **E.I. DU PONT DE NEMOURS AND COMPANY
Wilmington, DE 19898 (US)**

(72) Inventors:
• **NISHIJIMA, Koichi
Chiba, 2990125 (JP)**

• **RIOUX, Bernard
FR- Puteaux (FR)**

(74) Representative: **Cresswell, Thomas Anthony
J.A. Kemp & Co.
14 South Square
Gray's Inn
London
WC1R 5JJ (GB)**

(56) References cited:
WO-A-93/06137        WO-A-2004/055908
JP-A- 2000 186 114

**Description**

**Technical Field**

The present invention relates to an encapsulation material for solar cell elements in solar cell modules and solar cell modules using the encapsulation material. More specifically, the present invention is concerned with an encapsulation material for a solar cell element having excellent transparency, heat resistance, flexibility and other properties that makes the formation of solar cell modules easy.

**Background Art**

Hydroelectric power generation, wind power generation and photovoltaic power generation which makes use of inexhaustible natural energy and help reduce carbon dioxide and improve other environmental problems are getting into the limelight. Out of these, the spread of photovoltaic power generation has been making remarkable progress in recent years as the performance of solar cell modules in power generation efficiency and other respects has been making marked improvements while on the other hand their prices have been declining and the national and local governments has been promoting the business of introducing photovoltaic power generation systems for household use. However, further spread of photovoltaic power generation will require further cost reductions, and to this end research is being continued night and day to work particularly on the rationalization of solar cell module manufacturing processes and the improvement of power generation efficiency.

A solar cell module is generally a package comprising a solar cell element such material as silicon, gallium-arsenic and copper-iridium-selenium, a top transparent protective material, a bottom protective substrate material and an encapsulation material, in which the solar cell element is protected with the protective materials and they are fixed each other by using the encapsulation material. For this reason, any solar cell encapsulation material is required to have satisfactory transparency so that power generation efficiency will be increased. A solar cell encapsulation material is also required to have heat resistance so that any troubles such as the flow or deformation will not occur even when the temperature rises during the use of the solar cell module. Furthermore, in recent years, as the thickness of solar cell elements is becoming smaller and smaller, encapsulation materials having excellent flexibility are also sought after.

Further, silicon cells are the most expensive, but their semiconductor properties basically do not decline. Because of this, there is a need to remove for reuse the silicone cell alone from a solar cell module after the use of the module or when the part of the module breaks down and is replaced with a new one. However, at present, the encapsulation material is crosslinked and consequently it is impossible to remove the encapsulation material even by heating and melting it. For this reason, encapsulation materials are required to have a function that will make the reuse of the silicon cell possible.

At present, ethylene-vinyl acetate copolymer having a high vinyl acetate content to which an organic peroxide has been compounded is used as the encapsulation materials for the solar cell elements in solar cellmodules for a viewpoint of flexibility, transparency, heat resistance and other properties. For this reason, it has been necessary for making a solar cell module to use a two-step process in which a sheet-like encapsulation material made of an ethylene-vinyl acetate copolymer containing an organic peroxide is first prepared and then a solar cell element is sealed with such sheet thus obtained.

In the step of making the sheet, it has been necessary to mold the sheet at such low temperature that will not cause the decomposition of the organic peroxide and as the result it is impossible to increase the extrusion rate. On top of that, in the step of encapsulating the solar cell element, it has commonly been necessary to carry out cross-linking process over scores of minutes to one hour in an oven at a high temperature at which the organic peroxide is decomposed. Consequently, much time is required to produce a solar cell module, which in turn constitutes a factor in increasing the manufacturing cost. Besides, the encapsulation material thus obtained does not satisfy the need to reuse the solar cell elements as mentioned above.

To improve the efficiency in producing solar cell modules, the applicant of this application has already proposed a formulation using an ethylene-unsaturated carboxylic acid copolymer or its ionomer having particular properties (Patent reference 2). According to this proposal, it was possible to provide a solar cell encapsulation material having excellent transparency, heat resistance, adhesion and other properties and making the formation of solar cell modules easy, but it was difficult for those materials shown in specific examples to meet the need for reducing the thickness of solar cell elements due to their high rigidity.

Patent reference 1:Japanese Publication HEI 2-407090
Patent reference 2 : Japanese Laid-open Application 2000-186114

## Disclosure of the Invention

[Issues to be solved by the Invention]

Under these circumstance, the inventors of the present invention studied those substitute materials that would not require the use of any organic peroxide, consequently bringing about an improvement in the efficiency in the production of solar cell modules, and would have such excellent transparency, heat resistance and flexibility as will make a reduction in the thickness of solar cell elements adequately possible. As a result, the inventors have found that the material described below is suitable as such substitute materials and successfully made the present invention.

[Means for solving the issues]

Specifically, the present invention is an encapsulation material for a solar cell element which material comprises a copolymer of ethylene and an unsaturated carboxylic acid ester or vinyl acetate. having an unsaturated carboxylic acid ester or vinyl acetate content of 10 to 40 wt% which meets the following conditions (a) through (d):

(a) The melting point (T°C) (in accordance with JIS K7121-1987) of the copolymer and the unsaturated carboxylic acid ester or vinyl acetate unit content (X mol%) should satisfy the following formula:

$$-3.0X+125 \geq T \geq -3.0X+109$$

(b) The haze of the laminated sample obtainable by sandwiching a sheet of the copolymer 0.6 mm in thickness with two glass sheets should be not more than 10% provided that the haze of laminated two glass sheets only is 0.5%:
(c) The melting point (in accordance with JIS K7121-1987) is not lower than 75°C.
(d) The storage modulus at 150°C is not lower than $10^3$ Pa.

With regard to the copolymer of ethylene and unsaturated carboxylic acid ester or vinyl acetate, preferred is such a copolymer obtainable by the tubular method. Furthermore, at least one additive selected from the group of silane coupling agents, antioxidants, ultraviolet absorbers and weathering stabilizers is preferably added to the copolymer of ethylene and an unsaturated carboxylic acid ester or vinyl acetate to be used as the encapsulation material. In such an embodiment, the material of the invention can be obtainable by compounding the additive into the copolymer. Further the present invention provides a solar cell module obtainable by using the aforesaid encapsulation material.
Further provided is a solar cell module comprising a material of the invention
Also provided is a process of producing such a solar cell module, which process comprises encapsulating a solar cell element with a material of the invention and fixing it with top and bottom protective materials.

[Effects of the invention]

The encapsulation material of the present invention shows excellent heat resistance as well as satisfactory transparency and flexibility. Because of this, even if the compounding of the organic peroxide is omitted, it is possible to avoid such troubles as the flow or deformation of the encapsulation material even when the temperature rises during the use of the solar cell module, and there is no possibility of impairing appearance of solar cells. Furthermore, since the encapsulation material makes the omission of the use of an organic peroxide possible, it is also possible to increase productivity in the solar cell module manufacturing process sharply and reduce the manufacturing cost of solar cell modules substantially. Moreover, since the encapsulation material also makes the formation of an encapsulation material layer having excellent flexibility possible, it is possible to avoid the trouble of cracking and cope successfully with the need for lessening the thickness of the solar cell element.

## Preferred Embodiments of the Invention

The copolymer of ethylene and an unsaturated carboxylic acid ester or vinyl acetate used for encapsulation material of the present invention is a copolymer having an unsaturated carboxylic acid ester or vinyl acetate unit content of 10-40% by weight, preferably 15-40% by weight, in particular 20-38% by weight, which meets above conditions (a) to (d).
As an unsaturated carboxylic acid ester or vinyl acetate of the copolymer of ethylene and an unsaturated carboxylic acid ester or vinyl acetate, there can be exemplified one or more kinds selected from the group of unsaturated carboxylic acid esters such as methyl acrylate, ethyl acrylate, isopropyl acrylate, isobutyl acrylate, n-butyl acrylate, isooctyl acrylate, methyl methacrylate, isobutyl methacrylate, dimethyl maleate; and vinyl acetate. The copolymer, of ethylene and unsaturated carboxylic acid ester or vinyl acetate is desirable when considering flexibility transparency, and others. Particularly preferred is ethylene-unsaturated carboxylic acid ester copolymer, especially ethylene-methyl acrylate copolymer.

A copolymer having properties of the following (a) to (d) as the aforesaid copolymer of ethylene and an unsaturated carboxylic acid ester or vinyl acetate is used in the present invention.

(a) The melting point (T°C) (temperature showing the greatest endothermic peak in differential scanning calorimeter (DSC)) (by 7121 JIS K, 3146 ISO) and the unsaturated carboxylic acid ester or vinyl acetate unit content (X mole %) of the copolymer satisfy the following formula:

$$-3.0X+125 \geq T \geq -3.0X+109$$

preferably

$$-3.0X+125 \geq T \geq -3.0X+112$$

(b) The haze of laminated sample formed by sandwiching a sheet of the copolymer 0.6 mm in thickness with two glass sheets shows not more than 10%, preferably not more than 6% provided that haze of laminated two glass sheets only is 0.5%:
(c) A melting point is not lower than 75 °C; and
(d) A storage modulus at 150 °C is not lower than $10^3$ Pa.

The copolymer of ethylene and an unsaturated carboxylic acid ester or vinyl acetate having such properties as above can be positioned a random copolymer having moderate ununiformity since it is superior in heat resistance while showing almost equal transparency comparing with an general copolymer showing good randomness having the same polar monomer unit content.

Such a copolymer can be produced, for example, by multi-stage autoclave method or tubular method in high-pressure radical polymerization.

Especially, tubular method is more preferable because it is easy to obtain the copolymer having above properties. As an example of the manufacturing methods, there can be cited a method described in Japanese Laid-open Patent Application 62-273214 or Japanese Patent 3423308.

As the copolymer of ethylene and on unsaturated carboxylic acid ester or vinyl acetate, the copolymer having melt flow rate measured at 190°C under 2160g load (JISK 7210-1999, hereinafter referred as same) of 0.1-20g/10 minute, particularly 0.2-10g/10 minute is preferably used when considering processability, mechanical strength, thermostability in deforming at high temperature, etc.

For example, it is preferable to use the copolymer showing low deviation of glass at slanting test of 60° at 100°C when a laminate formed by sandwiching the copolymer between a glass sheet and an aluminum plate is prepared.

Furthermore the copolymer having JIS A hardness of not more than 90, preferably not more than 80 is preferably used for enabling to decrease the thickness of the solar cell element.

When using the copolymer of ethylene and on unsaturated carboxylic acid ester or vinyl acetate as the encapsulation material for a solar well, other polymers or various additives can be compounded with the copolymer, as required. As such additives, there can be exemplified silane coupling agents, ultraviolet absorbers, hindered phenol-type or phosphite-type antioxidants, hindered amine-type light stabilizers, light diffusing agents, fire retardants, antitarnish agents, etc.

Although the non-crosslinked encapsulation material is preferable in the present invention, the encapsulation material may be crosslinked with a crosslonling agent, as desired, when higher heat resistance is required.

A silane coupling agent is useful to improve adhesive property of the encapsulation material to protective materials or a solar battery element. As examples of the silane coupling agent, there can be cited a compound having a group to be rendered hydrolysis such as an alkoxy group as well as an unsaturated group such as vinyl group, acryloxy group and methacryloxy group; amino group and epoxy group.

Specific examples of the silane coupling agent include N-(β-aminoethyl)-γ-aminopropyl trimethoxysilane, N-(β-aminoethyl) -γ- aminopropyl methyldimethoxysilane, γ-aminopropyl triethoxysilane, γ-glycidoxypropyl trimethoxysilane, γ-methacryloxypropyl trimethoxysilane, etc.

It is desirable for the silane coupling agent to compound about 0.1-5 parts by weight based on 100 parts by weight of ethylene/polar monomer copolymer.

As the ultraviolet absorber that can be added to the encapsulation material for a solar cell element of the present invention, various types of agents such as benzophenone-type agents, benzotriazole-type agents, triazine-type agents and salicylic acid ester-type agents can be cited.

As the benzophenone type ultraviolet absorption agent, there can be cited, for example, 2-hydroxy-4-methoxy benzophenone, 2-hydroxy-4-methoxy-2'-carboxy benzophenone, 2-hydroxy-4-octoxy benzophenone, 2-hydroxy-4-n-dodecyloxy benzophenone, 2-hydroxy-4-n-octadecyloxy benzophenone, 2-hydroxy-4-benzyloxy benzophenone, 2-hydroxy-4-methoxy-5-sulphobenzophenone, 2-hydroxy-5-chloro benzophenone, 2,4-dihydroxy benzophenone, 2,2'-dihydroxy-4-methoxy benzophenone, 2,2'-dihydroxy -4,4'-dimethoxy benzophenone and 2,2',4,4'-tetrahydroxy benzophenone.

As the benzotriazole-type ultraviolet absorption agent, there can be cited a hydroxyphenyl-substituted benzotriazole compound, for example, 2-(2-hydroxy-5- methylphenyl) benzotriazole, 2-(2-hydroxy-5-t-butylphenyl) benzotriazole, 2-(2-hydroxy-3,5-dimethylphenyl) benzotriazole, 2-(2-methyl-4-hydroxyphenyl) benzotriazole, 2-(2-hydroxy-3-methyl-5-t-butylphenyl) benzotriazole, 2-(2-hydroxy-3,5-di-t-amylphenyl) benzotriazole, 2-(2-hydrohy-3,5-di-t-butylphenyl) benzotriazole, etc.

As the triazine-type ultraviolet absorbers, there can be cited 2-[4,6-bis(2,4-dimethylphenyl)-1,3,5-triazine-2-yl]-5-(octy loxy) phenol and 2-(4,6-diphenyl-1,3,5-triazine 2-yl)-5-(hexyloxy) phenol.

As the salicylic acid ester, there can be cited phenyl salicylate and p-octyl phenyl salicylate.

A solar cell module can be prepared by fixing a solar cell element with top and bottom protective materials by using the encapsulation material for a solar cell element of the present invention. As such a solar cell module, various types of modules can be exemplified. Such examples include solar cell modules having structure in which encapsulation materials sandwich both sides of solar battery element like upper part transparent protective material/encapsulation material/solar cell element /encapsulation material/lower part protective material; having structure in which the upper part transparent protective material and the encapsulation material are formed over the solar cell element prepared on the front surface of the lower part protective substrate, and having structure in which the encapsulation material and the lower part protective material are formed on a solar cell element prepared on the rear surface of the upper part protective material that is, for example, an amorphous solar cell element prepared by sputtering method or the like on a fluororesin-type protective material

As the solar cell element, there can be used various types of solar cell elements such as silicon-based element including single-crystal silicon, multi-crystal silicon, amorphous silicon, and III-V group or II-VI group compound semiconductor-based element including gallium-arsenic, copper-indium-selenium and cadmium-tellurium.

As the upper part protective material constituting the solar cell module, glass, acrylic resin, polycarbonate, polyester, fluorine-containing resin, etc. can be cited.

As the lower part protective material, single-or multi-layered protective material of metal, various types of thermoplastic resins, etc, can be cited. For example, single- or multi-layered protective materials of metals such as tin, aluminum and stainless steel, inorganic materials such as glass, polyesters, inorganic material-deposited polyesters, fluorine-containing resins, polyolefins.

A primer can be adapted to such upper part and/or lower part protective materials to raise adhesive property to the encapsulation material.

In one embodiment, the material of the invention is sheet-like.

The encapsulation material for a solar cell element of the present invention is usually used in sheet shape having thickness of around 0.1-1.2mm, preferably 0.1-1mm.

The sheet-like encapsulation material for a solar cell can be produced by a known sheet forming method using T-die extruding machine, calendar molding machine, etc.

For example, the encapsulation material can be obtained by dry-blending ethylene-polar monomer copolymer with additives, as required, such as silane coupling agent, ultraviolet absorption agent, antioxidant and light stabilizer, supplying the blend to T-die extruder through its hopper and molding into sheet-like article.

Of course, a part or all of additives can be used as masterbatch at the occasion of such dry blending. In addition, for T-die extrusion and calendar molding, a resin composition obtained by melt blending ethylene-polar monomer copolymer with a part or all of additives using a mono-axial extruder, a bi-axial extruder, Banbary mixer, a kneader, ect. can be used.

When preparing solar cellmodules, modules having the structure mentioned above can be formed by a conventionally known method that a sheet of the encapsulation material of the present invention is prepared beforehand and pressed at the temperature which encapsulation material melts. In this case, since it is not necessary to compound the organic peroxide to the encapsulation material, sheet formation of the encapsulation material can be conducted at high temperature with high productivity, and further formation of modules can be completed within short time at high temperature because two-step adhesion process is not necessary.

In addition, it is possible to prepare the solar cell module in one step, without doing sheet forming expressly, by adapting a method for laminating the encapsulation material of the present invention with the solar cell element, or the upper or lower part protective material by extrusion coating.

Therefore, when the encapsulation material of the present invention is used, it becomes possible to improve the productivity of the module markedly.

## Examples

The present invention is explained in more detail by practical examples as follows.

Raw materials used in examples and comparative examples are as follows.

(1) Ethylene-methyl acrylate copolymer (EMA-1):

Content of methyl acrylate unit: 30 % by weight (12.2 % by mole).
Melt flow rate (JIS K7210, 190 °C, 2160g load) : 3g /10 minute.

(2) Ethylene-methyl acrylate copolymer (EMA-2):

Content of methyl acrylate unit: 35 % by weight (15.0 % by mole).
Melt flow rate (JIS K7210, 190 °C, 190 °C, 2160g load): 3g /10 minute.

(3) Ethylene-vinyl acetate copolymer (EVA):

Content of vinyl acetate: 25 % by weight (9.8 % by mole).
Melt flow rate (JIS K7210, 190 °C, 190 °C, 2160g load): 2.5g /10 minute.

(4) Ethylene-ethyl acrylate copolymer (EEA):

Content of ethyl acrylate: 25 % by weight (8.5% by mole).
Melt flow rate (JIS K7210, 190 °C, 190 °C, 2160g load): 5 g /10 minute.

(5) Silane coupling agent
γ-(Methacryloxypropyl) trimethoxy silane
(6) UV absorber
Cyasorb UV1164 (Product from Cytec Industries)
(7) Photo stabilizer

(a) Tinuvin 622LD (Product from Ciba Geigy)
(b) Sanol LS770 (Product from Ciba Geigy)

(8) Anti-oxidant
Irganox 1010 (Product from Ciba Geigy)

[Example 1]

A sheet of 0.6mm thickness of above ethylene-methy acrylate copolymer (EMA -1) with 0.3 wt% of UV absorber, 0.15 wt% of photo stabilizer (a), 0.15 wt% of photo stabilizer (b) and 0.03 wt% of anti-oxidant was prepared at molding temperature of 120°C with a profile extruding machine (diameterof screw: 40mm, L/D=26, full flight screw, compression ratio:2.6).

The obtained sheet was sandwiched between two blue glass sheets of 3mm thickness and laminated with a vacuum laminator at 150°C for 15 minutes.

Haze of the laminated sample was measured (haze of laminated two glass sheets only is 0.5%).

The ethylene copolymer sheet obtained above was sandwiched between a blue glass sheet 3 mm thick and an aluminum plate 3 mm thick and laminated with a vacuum laminator at 150°C for 15 minutes. The laminated sample was slanted to 60° and held in that position at 100°C for 500 hours. The condition of the laminated sample that the glass sheet slid to get out of alignment with melt of the sheet was observed.

Further a sheet of 2 mm thickness of the above copolymer was prepared with a press molding machine. The storage modulus at 150°C of the sheet was measured.

The obtained sheet was sandwiched between a blue glass sheet of 3mm thickness and a back sheet (white colored polyethylene terephthalate) and laminated with a vacuum laminator at 150°C for 15 minutes.

Yellowness index of the laminated sample was measured, then the samples were exposed under 2 conditions and after aging yellowness index of the samples was measured again.

The ethylene copolymer sheet obtained above was sandwiched between a blue glass sheet 3 mm thick and an aluminum plate 3 mm thick and laminated with a vacuum laminator at 150°C for 15 minutes.

The results are shown in table 1.

[Example 2]

Evaluation was carried out in the same manner as in Example 1 except that above ethylene-methyl acrylate copolymer (EMA-2) was used instead of EMA-1. The results are shown in table 1.

[Comparative example 1]

Evaluation was carried out in the same manner as in Example 1 except that above ethylene-vinyl acetate copolymer (EVA) was used instead of EMA-1. The results are shown in table 1.

[Comparative example 2]

Evaluation was carried out in the same manner as in Example 1 except that the ethylene-acrylic acid ethyl copolymer (EEA) was used instead of EMA-1. The results are shown in table 1.

The melting point, the JIS A hardness, haze and the storage modulus were measured under the following conditions.

(1) Melting point:

The melting point was measured in accordance with a method of JIS K-7121-1987 using a DSC device (Product from Du Pont Instrument Corporation).

(2) JIS A hardness:

The hardness was measured in accordance with JIS K 7215 (Durometer A type, Product from Toyo Seiki Seisaku-sho, Ltd.).

(3) Haze:

Haze was evaluated with a haze meter produced by Suga Test Instruments Co., Ltd. in accordance with JIS K 7105.

(4) Storage modulus:

Storage modulus was measured with the following device under the following conditions.

Device: DVE-V4 FT-Rheospectler produced by Nihon Rheology KIKI Inc.

Conditions: Pulling mode, sheet thickness of 2mm, frequency of 10Hz, amplitude of $2\mu$m, sine wave, programming rate of 3°C/minute and measurement temperature of 150 °C.

(5) Aging test.

Yellowness index of laminated samples was measured after aging under below conditions.

Heat resistance : 120 deg C x 500 hours
Moisture resistance : 85 deg C x 700 hours

Table 1

|  | Example 1 | Example 2 | Comparative Example 1 | Comparative Example 2 |
|---|---|---|---|---|
| Encapsulation material | EMA-1 | EMA-2 | EVA | EEA |
| Melting Point(T) (°C) | 85 | 76 | 76 | 78 |
| - 3.0X+109 | 72.4 | 64 | 79.6 | 83.5 |
| - 3.0X+125 | 88.4 | 80 | 95.6 | 99.5 |
| JIS A Hardness | 65 | 53 | 85 | 77 |
| Haze (%) | 4.5 | 4.0 | 3.3 | 3.1 |
| Storage Modulus (Pa) | $1.3 \times 10^5$ | $1.2 \times 10^5$ | $9.7 \times 10^4$ | $2.2 \times 10^4$ |
| Slide at 60° Slanting | None | None | Much | Much |
| ΔYI : Heat resistance | 3.8 | 3.6 | * | * |
| ΔYI : Moisture resistance | 0.3 | 0.5 | * | * |
| * It is not possible to measure due to the change in sample's shape. | | | | |

**Claims**

1. An encapsulation material for a solar cell element, which material comprises a copolymer of ethylene and an unsaturated carboxylic acid ester or vinyl acetate having an unsaturated carboxylic acid ester or vinyl acetate unit content of 10-40% by weight and meets the following conditions (a) to (d):

   (a) the melting point (T°C) of the copolymer (in accordance with JIS K 7121) and the unsaturated carboxylic acid ester or vinyl acetate unit content (X mole %) of the copolymer satisfy the following formula:

$$-3.0X + 125 \geq T \geq -3.0X + 109$$

   (b) the haze of a laminated sample obtainable by sandwiching a 0.6 mm thick sheet of the copolymer between two glass sheets is not more than 10 % provided that the haze of the two glass sheets laminated alone is 0.5 %
   (c) the melting point is not lower than 75 °C
   (d) the storage modulus at 150°C is not lower than $10^3$ Pa.

2. A material according to claim 1 wherein the copolymer of ethylene and an unsaturated carboxylic acid ester or vinyl acetate is obtainable by a tubular method.

3. A material according to claim 1 or claim 2, which further comprises at least one additive selected from silane coupling agents, antioxidants, ultraviolet absorbers and light stabilizers, and is obtainable by compounding the additive into the copolymer of ethylene and an unsaturated carboxylic acid ester or vinyl acetate.

4. A material according to any one of claim 1 to 3, wherein the material is sheet-like.

5. A solar cell module obtainable by using a material as defined in any one of claims 1 to 4.

6. A solar cell module comprising a material as defined in any one of claims 1 to 4.

7. A process of producing a solar cell module of claim 5 or 6, which process comprises encapsulating a solar cell element with a material as defined in any one of claims 1 to 4 and fixing it with top and bottom protective materials.

**Patentansprüche**

1. Verkapselungsmaterial für ein Solarzellenelement, wobei das Material ein Copolymeres aus Ethylen und einem ungesättigten Carbonsäureester oder Vinylacetat, das einen Gehalt an ungesättigtem Carbonsäureester oder Vinylacetat von 10-40 Gew.-% enthält und die folgenden Bedingungen (a) bis (d) erfüllt, umfasst:

(a) der Schmelzpunkt (T °C) des Copolymeren (gemäß JIS K 7121) und der Gehalt an ungesättigten Carbonsäureester- oder Vinylacetat-Einheiten (X Mol-%) des Copolymeren erfüllen die folgende Formel:

$$-3,0X + 125 \geq T \geq -3,0X + 109$$

(b) die Trübung einer laminierten Probe, die durch sandwichartige Anordnung einer 0,6 mm dicken Folie des Copolymeren zwischen zwei Glasplatten erhältlich ist, beträgt nicht mehr als 10 %, vorausgesetzt, dass die Trübung der beiden laminierten Glasplatten allein 0,5% beträgt,
(c) der Schmelzpunkt liegt nicht unter 75 °C,
(d) der Speichermodul bei 150 °C liegt nicht unter $10^3$ Pa.

**2.** Material nach Anspruch 1, wobei das Copolymere aus Ethylen und einem ungesättigten Carbonsäureester oder Vinylacetat durch ein Schlauchverfahren erhältlich ist.

**3.** Material nach Anspruch 1 oder 2, das ferner mindestens ein Additiv umfasst, das aus Silan-Haftmitteln, Antioxidantien, UV-Absorbern und Lichtschutzmitteln ausgewählt ist, und das durch Kompoundieren des Additivs in das Copolymere aus Ethylen und einem ungesättigten Carbonsäureester oder Vinylacetat erhältlich ist.

**4.** Material nach einem der Ansprüche 1 bis 3, wobei das Material folienartig ist.

**5.** Solarzellenmodul, erhältlich durch Verwendung eines Materials nach einem der Ansprüche 1 bis 4.

**6.** Solarzellenmodul, umfassend ein Material gemäß der Definition in einem der Ansprüche 1 bis 4.

**7.** Verfahren zur Herstellung eines Solarzellenmoduls nach Anspruch 5 oder 6, wobei das Verfahren das Verkapseln eines Solarzellenelements mit einem Material gemäß der Definition in einem der Ansprüche 1 bis 4 und dessen Fixierung mit oberen und unteren Schutzmaterialien umfasst.

**Revendications**

**1.** Matériau d'encapsulation pour élément de pile solaire, lequel matériau comprend un copolymère d'éthylène et d'acétate de vinyle ou d'un ester d'acide carboxylique insaturé, qui contient de 10 à 40 % en poids de motifs dérivés de l'acétate de vinyle ou d'un ester d'acide carboxylique insaturé et qui respecte les conditions (a) à (d) suivantes :

a) le point de fusion T, en °C, du copolymère, mesure selon la norme JIS K-7121, et sa fraction X, en % en moles, de motifs dérivés de l'acétate de vinyle ou d'un ester d'acide carboxylique insaturé satisfont la relation suivante :

$$-3,0 \, X + 125 \geq T \geq -3,0 \, X + 109 \qquad ;$$

b) le pourcentage de voile d'un échantillon stratifié qu'on obtient en disposant une feuille du copolymère épaisse de 0,6 mm en sandwich entre deux feuilles de verre ne vaut pas plus de 10 %, sous réserve que le pourcentage de voile des deux feuilles de verre stratifiées seules vaille 0,5 % ;
c) le point de fusion n'est pas inférieur à 75°C;
d) et le module de conservation à 150°C ne vaut pas moins de $10^3$ Pa.

**2.** Matériau conforme à la revendication 1, pour lequel le copoly-mère d'éthylène et d'acétate de vinyle ou d'un ester d'acide carboxylique insaturé peut être obtenu par un procédé de soufflage de tube.

**3.** Matériau conforme à la revendication 1 ou 2, qui comprend en outre au moins un adjuvant choisi parmi les agents de couplage de type silane, les anti-oxydants, les absorbeurs de rayonnement ultraviolet et les agents photostabi-

**EP 1 877 455 B1**

lisants, et qu'on peut obtenir en incorporant l'adjuvant dans le copolymère d'éthylène et d'acétate de vinyle ou d'un ester d'acide carboxylique insaturé.

4. Matériau conforme à l'une des revendications 1 à 3, lequel matériau a l'aspect d'une feuille.

5. Module à pile solaire, qu'on peut obtenir en utilisant un maté-riau conforme à l'une des revendications 1 à 4.

6. Module à pile solaire, qui comprend un matériau conforme à l'une des revendications 1 à4.

7. Procédé de production d'un module à pile solaire conforme à la revendication 5 ou 6, lequel procédé comporte le fait d'encapsuler un élément de pile solaire dans un matériau conforme à l'une des revendications 1 à 4, et le fait de fixer cet élément à l'aide de matériaux protecteurs placés dessus et dessous.

**10**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP HEI2407090 B
- JP 2000186114 A
- JP 62273214 A
- JP 3423308 B